# EUROPEAN PATENT APPLICATION

(11) **EP 2 415 368 A2**
(43) Date of publication of application: **08.02.2012**
(21) Application number: 11176678.8
(22) Date of filing: 05.08.2011
(51) Int. Cl.: A46B 15/00

(54) **Improved dental care device**

(30) Priority: 27.08.2010 AU 2010903838; 06.08.2010 AU 2010903514
(71) Applicant: Martin, Samuel, Sydney NSW (AU); Farrington, David, Sydney NSW (AU)
(72) Inventor: Martin, Samuel, Sydney NSW (AU); Farrington, David, Sydney NSW (AU)
(74) Representative: Williams, Ceili

(57) **Abstract**

A dental care device for selective use as a toothbrush or a dental floss source. The device comprises an elongate body, wherein the body defines cavity used as a dental floss reservoir, a brush element proximal to a first end of the body, a floss egress aperture at a second end of the body. The brush element including a plurality laterally extending bristle members. The body includes a window element for enabling visual inspection of a dental floss remaining in the reservoir. A dental floss source includes a spool of dental floss mounted within the reservoir such that dental floss can be drawn from the spool.

## Description

### FIELD OF THE INVENTION

The present invention relates to dental devices and in particular to dental care devices.

The invention has been developed primarily for use as a dental care device and will be described hereinafter with reference to this application. However, it will be appreciated that the invention is not limited to this particular field of use.

### BACKGROUND OF THE INVENTION

Any discussion of the prior art throughout the specification should in no way be considered as an admission that such prior art is widely known or forms part of the common general knowledge in the field.

### OBJECT OF THE INVENTION

It is an object of the present invention to overcome or ameliorate at least one of the disadvantages of the prior art, or to provide a useful alternative.

It is an object of the invention in its preferred form to provide a dental care device capable of selectively being used as either a toothbrush or dental floss tool.

### SUMMARY OF THE INVENTION

According to the invention there is provided a dental care device for selective use as a toothbrush or a dental floss tool, the device comprising:
an elongate body, wherein the body defines cavity used as a dental floss reservoir;
a brush element proximal to a first end of the body;
a pair of outwardly extending support arms at a second end of the body.

Preferably, the body is bifurcated at the second end to integrally form the pair of support elements.

Preferably, the device further comprising a source of dental floss located within the cavity.

Preferably, the device comprises a dental floss egress aperture for enabling a portion of dental floss to be drawn from the dental floss source. More preferably, the dental floss egress aperture is defined within the body. Most preferably, the dental floss egress aperture is proximal to the dental floss reservoir. Alternatively, dental floss egress aperture is defined by a first support arm for enabling the portion of dental floss to be drawn there from.

Preferably, the brush element includes a plurality laterally extending bristle members.

Preferably, each support arm has a support element configured to support a segment of dental floss extended there between. More preferably, the support element can include any one of the set comprising: a through aperture defined through the respective support arm; an open niche defined across the respective support arm; an egress aperture defined in floss-communication with the dental floss reservoir.

Preferably, a portion of dental floss extends from the dental floss source to a first of the pair of support elements, across to the second support element, and to a retaining element for retaining an end of the portion of dental floss.

Preferably, the first end of the portion of dental floss, being proximal to the floss source, is retained from being further drawn from the reservoir by a first retaining element. More preferably, the second (or other) end of the portion of dental floss is retained by a second retaining element. Most preferably, the first and second retaining elements enable a section of dental floss supported between the support arms is held sufficiently taut for flossing teeth.

Preferably, the device further comprises one or more retaining elements for retaining the portion of dental floss such that a section of dental floss supported between the support arms is held sufficiently taut for flossing teeth.

Preferably, the device comprises a pair of retaining elements, operatively associated with opposite ends of the portion of dental floss. More preferably, a retaining element can include any one of the set comprising: one or more tie pegs; a pair of opposed edges defining a narrow retaining formation there between; a clamp assembly; a ratchet lock assembly.

Preferably, one or more retaining elements are located proximal to the body. Alternatively, each one of a pair of retaining elements is located on a respective support arm.

Preferably, a clamp assembly includes a relatively moveable clamp member with respect to the body, and is adapted to clamp dental floss there between. More preferably, the clamp member defines a niche for receiving and clamping dental floss. Most preferably, the clamp member is biased to a clamping configuration. Alternatively, the clamp member is preferably moveable with respect to a support arm, and is adapted to clamp dental floss there between.

Preferably, the dental floss source comprises a spool of dental floss. More preferably, the spool is mounted within the reservoir, wherein dental floss can be drawn from the spool. Most preferably, the spool is rotatably mounted with respect to the body, wherein the rotation of the spool enables dental floss can be drawn from the spool.

Preferably, the body includes an inspection aperture for enabling visual inspection of the dental floss remaining in the reservoir. More preferably, the inspection aperture has a substantially clear close for enabling visual inspection there through.

Preferably, the source of dental floss is substantially sealed within the reservoir during manufacture. More preferably, the source of dental floss is not adapted to be refilled. Most preferably, upon exhaustion of dental floss from the source, the device is preferably disposed of.

Preferably, a user draws dental floss by operating a rotary dial element.

Preferably, the device further includes a dental floss cutting element for excising a used portion of dental floss. More preferably, the cutting element is located such that retained dental floss protrudes from an aperture. Most preferably, the device includes a cap element for covering an exposed portion of the retained dental floss.

According to the invention there is provided a dental care device for selective use as a toothbrush or a dental floss source, the device comprising:
an elongate body, wherein the body defines cavity used as a dental floss reservoir;
a brush element proximal to a first end of the body; and
a floss egress aperture at a second end of the body.

### BRIEF DESCRIPTION OF THE DRAWINGS

A preferred embodiment of the invention will now be described, by way of example only, with reference to the accompanying drawings in which:
FIG. 1 is a plan view of an embodiment dental care device according to the invention;
FIG.2 is a side elevation view of the device of FIG. 1;
FIG.3 is a plan view of an embodiment dental care device according to the invention;
FIG.4 is a side elevation view of the device of FIG. 3;
FIG. 5 is a partial enlarged plan view of an embodiment dental care device according to the invention;
FIG.6 is a partial enlarged plan view of an embodiment dental care device according to the invention;
FIG.7 is a partial enlarged plan view of an embodiment dental care device according to the invention;
FIG.8A-8F: each show embodiment pairs of support arms for a dental care device according to the invention, showing example orientations of the support arms;
FIG.9A-9C each show a side view of an embodiment support arm of a dental care device according to the invention;
FIG.10A-10F each show an embodiment retaining element for a dental care device according to the invention; and
FIG. 11A is a side elevation view of an embodiment dental care device according to the invention;
FIG. 11B is a side elevation view of an embodiment dental care device according to the invention, shown with a floss cap;
FIG.12 is a partial enlarged plan view of an embodiment dental care device according to the invention;
FIG. 13A is a side elevation view of an embodiment dental care device according to the invention; and
FIG. 13B-13D are partial enlarged views of the embodiment dental care device of FIG. 13A.

### PREFERRED EMBODIMENT OF THE INVENTION

A dental care device comprising a combination tooth brush and dental floss tool is provided. The dental care device can be selectively used as a toothbrush or a dental floss tool.

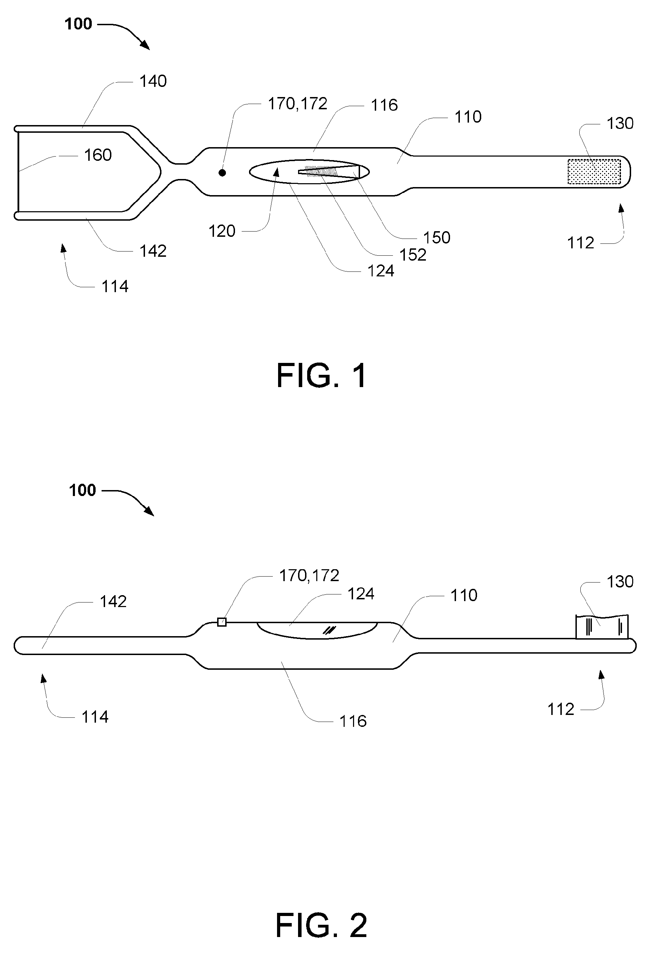

Referring to FIG. 1 and FIG. 2, an embodiment dental care device 100 comprises:
an elongate body 110, wherein the body defines cavity used as a dental floss reservoir 120;
a brush element 130 proximal to a first end of the body 112;
a pair of outwardly extending support arms 140,142 at a second end of the body 114.

An embodiment dental care device can thereby include a means for storing floss, a means for dispensing floss, a means for supporting a portion of dispensed floss, and a means for retaining the portion of dispensed floss in a position that allows a section of the dispensed floss to be used for flossing a users teeth, and a means for brushing teeth.

Dental floss can protrude from the reservoir and traverse a path to the support arms internal or external to the body. The dental floss is drawn across the gap between the support arms, wherein the dental floss is retained by one or more retaining element such that a section of floss between the support arms is retained sufficiently taut to be used in flossing teeth.

In this embodiment, the body is comprised of plastics. The plastics can include polypropylene. The body handle portion can be ergonomically designed so as to comfortably fit a hand of a user in either a dental floss or toothbrush orientation.

The brush element can include a plurality laterally extending bristle members. The toothbrush bristles can be configured in a conventional manner. The bristles may be antibacterial bristles.

It will be appreciated that, in this example embodiment, the body 110 is bifurcated at the second end 114 to integrally form the pair of support elements 140 and 142. However, it will be further appreciated that the support arms can be fixedly, either removably or non-removably, coupled to the body.

A pair of outwardly extending floss support arms can include a means for securely holding floss. The pair of support arms are separated by space, such that when a section of a portion of floss is secured there between, the section of floss can be used to floss teeth. It will be appreciated that, the body becomes a handle for the floss tool, thereby making it easier for a user to reach the back teeth with the section of floss.

The body can include a broader mid-section 116, adapted for defining the cavity reservoir 120 therein.

A source of dental floss 150 located within the cavity reservoir 120. A portion of dental floss 160 can be drawn from the source of dental floss.

In use, a portion of dental floss 160 can be drawn from the source of dental floss and section thereof is tautly restrained between the pair of support arms 140, 142. Typically, a first end of the portion of dental floss, being proximal to the floss source, is retained from being further drawn from the reservoir by a first retaining element 170; and the second (or other) end of the portion of dental floss is retained by a second retaining element 172.

A portion of dental floss can extend from the dental floss source to a first of the pair of support elements, across to the second support element, and to a retaining element for retaining an end of the portion of dental floss. A first end of the portion of dental floss, being proximal to the floss source, is retained from being further drawn from the reservoir by a first retaining element. The second (or other) end of the portion of dental floss is retained by a second retaining element. The first and second retaining elements enable a section of dental floss supported between the support arms is held sufficiently taut for flossing teeth.

The device can comprises one or more retaining elements for retaining the portion of dental floss such that a section of dental floss supported between the support arms is held sufficiently taut for flossing teeth.

An inspection aperture 124 can be provided for enabling visual inspection of the dental floss remaining in the reservoir. Typically, the inspection aperture has a substantially clear close for enabling visual inspection there through.

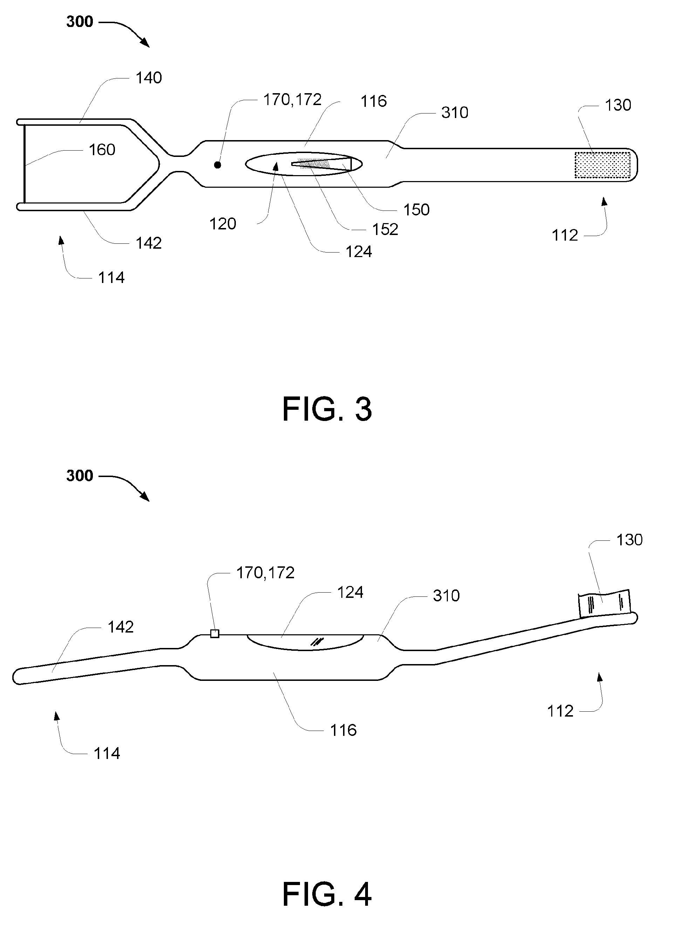

Referring to FIG. 3 and FIG. 4, an embodiment dental care device 300 (and/or the body 310) is adapted for ergonomic use. The device is designed to enable a user to easily grip and hold the body during use as either a toothbrush or a dental floss tool.

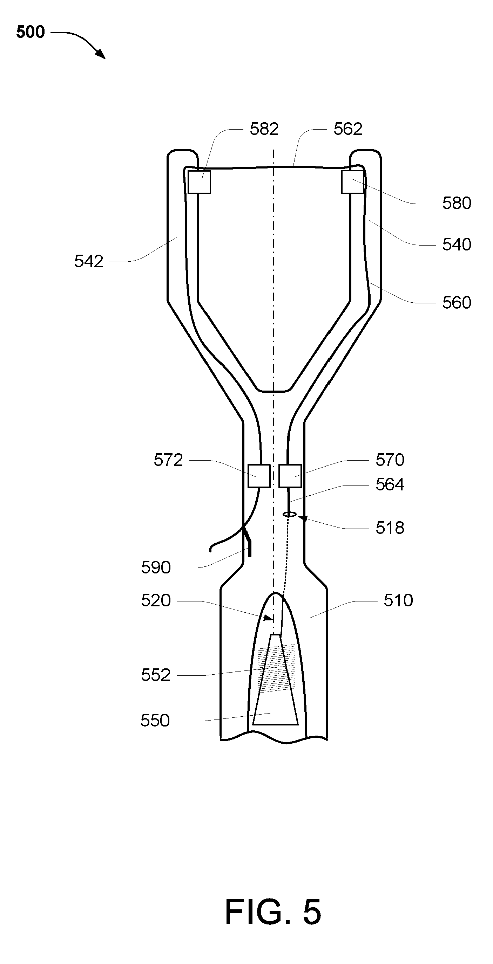

Referring to FIG. 5, an embodiment dental care device 500 can comprise a dental floss egress aperture 518 within the body 510 proximal to the dental floss reservoir 520. This dental floss egress aperture enables a portion of dental floss 560 to be drawn from the dental floss source 550 comprising a winding of dental floss 552. It will be appreciated that a dental floss egress aperture can alternatively be defined by a first support arm for enabling the portion of dental floss to be drawn there from.

In this example embodiment, a portion of dental floss 560 can be drawn from the dental floss source 550 through the egress aperture 518. A segment of dental floss 562 is supported between the pair of support arms 540, 542 by a respective support elements 580, 582. The portion of dental floss is further retained between one or more retaining elements 570, 572, for enabling the segment of dental floss 562 to be tautly restrained between the pair of support arms.

In this embodiment, when in use, a portion of dental floss is substantially located external to the body 510 and support arms 540,542. Each support arms 540,542 has a respective support element 580, 582 configured to support an external segment of dental floss 562 extended there between.

A dental floss cutting element 590 is used to excise a used portion of dental floss, and is typically located relative to (or displaced from) the egress aperture 518 - such that retained dental floss (for example 564) protrudes from the egress aperture. A cap element (not shown) can be used for covering any exposed portion of the retained dental floss. The cutting element can be in the form of a blade for cutting the dental floss to a desired length and/or for discarding used length of dental floss. Typically, the blade can be held in place by a living hinge which is located in a recess portion of the body.

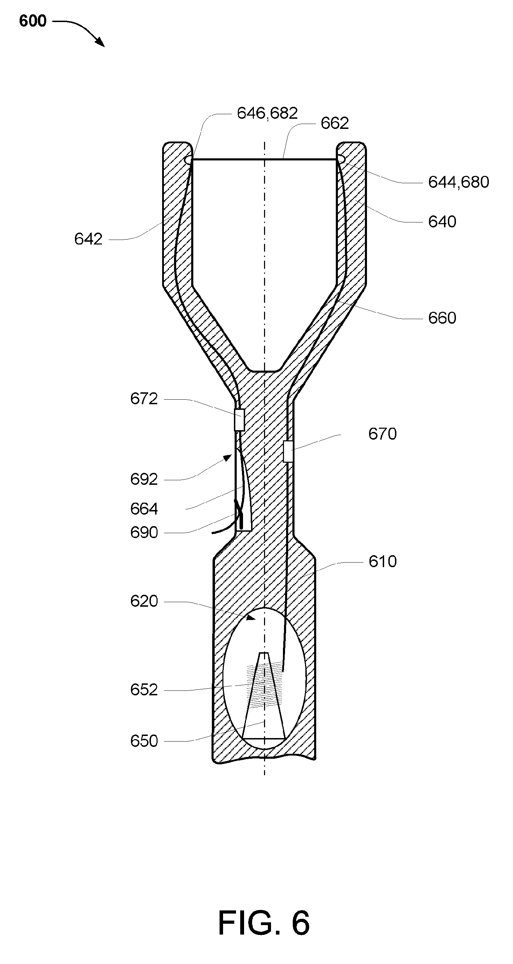

Referring to FIG. 6, an embodiment dental care device 600 can comprise a dental floss egress aperture 644 within a first support arm 640. The egress aperture further defines a first support element 680. The egress aperture is in floss-communication with the dental floss reservoir 620, for enabling dental floss 652 to be drawn from the dental floss source 650.

In this example embodiment, a portion of dental floss 660 can be drawn from the dental floss source 650. The portion of dental floss can be drawn from the dental floss source through the aperture 644, which in this example further defines a support element 680. A segment of dental floss 662 is supported between a pair of support arms 640, 642 by a respective support element 680, 682. The portion of dental floss is further retained between one or more retaining elements 670, 672.

In this embodiment, when in use, the portion of dental floss is substantially located internal to the body 610 and support arms 640, 642. Each support arm 640, 642 has a respective support element 680,682 configured to support an external segment of dental floss 662 extended there between.

Alternatively, the dental floss may egress the aperture 644 within a first support arm 640 and be supported externally by a second support arm 642. Thereby the dental floss is substantially external to the body 610 and support arm 642 after exiting the egress aperture 644 .

A dental floss cutting element 690 is used to excise a used portion of dental floss, and is typically located relative to (or displaced from) a terminal aperture 692 - such that retained dental floss (for example 664) protrudes from the terminal aperture once the used portion is excised. A cap element (not shown) can be used to covering any exposed portion of the retained dental floss.

The support arm can includes an aperture for receiving the floss there through, an open slot for receiving the floss or a retaining groove for realisably retaining floss. The retaining groove having side walls that are spaced sufficiently together, such that dental floss pressed into the groove can be held securely by frictional forces between the floss and the walls of the groove.

In this embodiment, the dental floss source can be in the form of a spool of dental floss adapted and wound for enabling dental floss to be drawn axially from the spool. It will be appreciated that the spool can be fixedly mounted or rotatably mounted to the body.

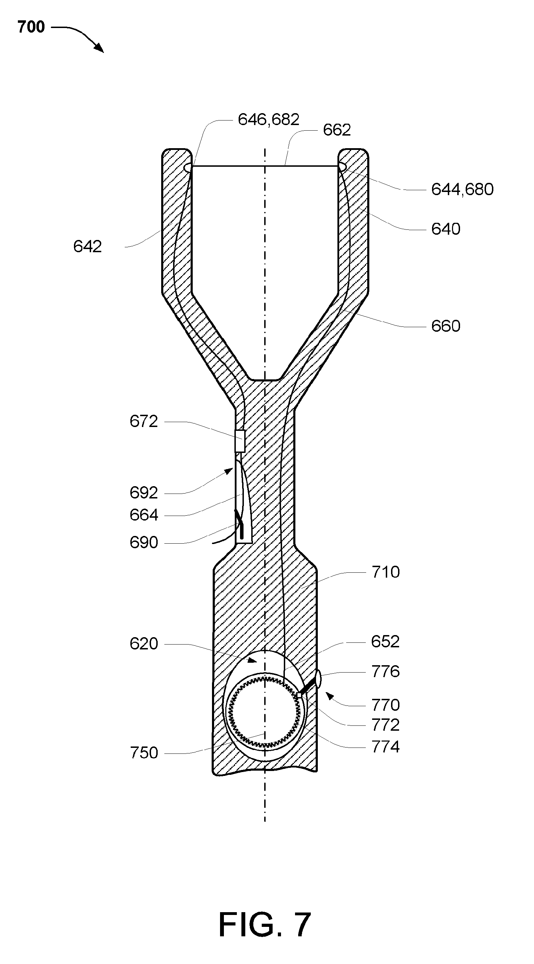

FIG. 7 shows an embodiment dental care device 700, similar to the device 600 of FIG.6. In this example, the dental floss source 650 of dental care device 600 is configured as a spool dental floss source 750 rotatably mounted with respect to the body 710. The first retaining element 670 of dental care device 670 is reconfigured to provide a first retaining device 770 operatively associated with the spool dental floss source 750. Rotation of the spool enables dental floss can be drawn there from.

In this example embodiment, the first retaining element 770 includes a pawl 772 for engaging a plurality of abutment formations 774 (or detents) provided around the circumference of the spool. Engagement of the pawl 772 with one of the plurality of abutment formations 774 restricts further rotation of the spool thereby restraining further drawing of the portion of dental floss 660. A release element 776 is operatively associated with the pawl 772 to disengage it from the abutment formations 774, thereby enabling the spool to rotate for drawing dental floss. It will be appreciated that, with the spool locked in place, the end of the portion of floss 664 can be drawn sufficiently taut and retained in position by a retaining element 672.

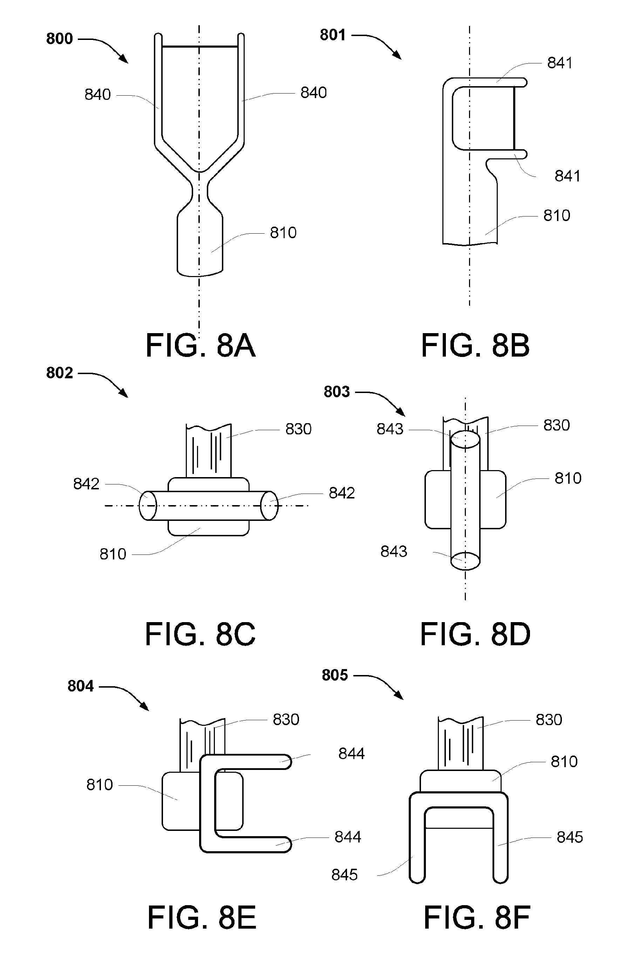

FIG.8A through FIG. 8F each show, by way of example only, embodiment pairs of support arms for a dental care device. It will be appreciated that the support arm may be embodied in many other forms.

FIG. 8A is a partial plan view of an embodiment dental care device 800, wherein the pair of support arms 840 are substantially parallel to the elongate body 810.

FIG. 8B is a partial plan view of an embodiment dental care device 801, wherein the pair of support arms 841 are substantially perpendicular to the elongate body 810.

FIG. 8C is end view of an embodiment dental care device 802, wherein the pair of support arms 842 are substantially orientated such that:
➢ the support arms are parallel to the elongate body 810;
➢ the support arms are perpendicular to the orientation of a brush element 830, and
➢ support arms define a plane that is perpendicular to the orientation of a brush element 830.

FIG. 8D is end view of an embodiment dental care device 803, wherein the pair of support arms 843 are substantially orientated such that:
➢ the support arms are parallel to the elongate body 810;
➢ the support arms are perpendicular to the orientation of a brush element 830, and
➢ support arms define a plane that is parallel to the orientation of a brush element 830.

FIG. 8E is end view of an embodiment dental care device 804, wherein the pair of support arms 844 are substantially orientated such that:
➢ the support arms are perpendicular to the elongate body 810;
➢ the support arms are perpendicular to the orientation of a brush element 830, and
➢ support arms define a plane that is parallel to the orientation of a brush
   element 830.

FIG. 8F is end view of an embodiment dental care device 805, wherein the pair of support arms 844 are substantially orientated such that:
➢ the support arms are perpendicular to the elongate body 810;
➢ the support arms are parallel to the orientation of a brush element 830, and
➢ support arms define a plane that is parallel to the orientation of a brush element 830.

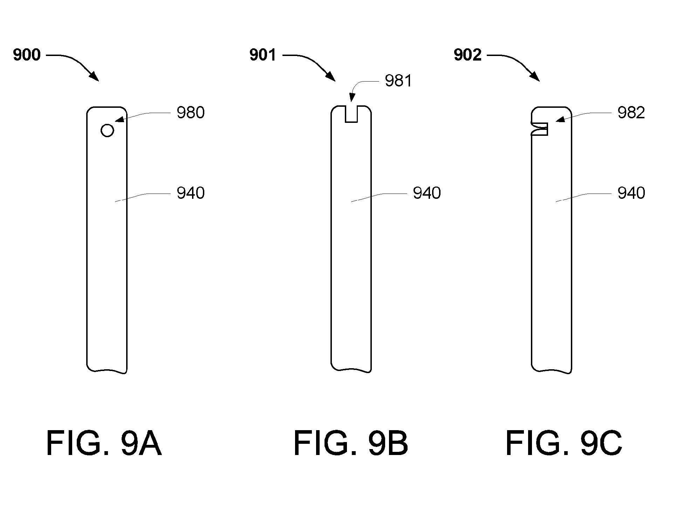

FIG.9A through FIG. 9C each show, by way of example only, a side view of an embodiment support arm of a dental care device. It will be appreciated that the support arm may be embodied in many other forms.

In an embodiment, each support arm has a support element configured to support a segment of dental floss extended there between. The support element can include any one of the set comprising: a through aperture defined through the respective support arm; an open niche defined across the respective support arm; an egress aperture defined in floss-communication with the dental floss reservoir.

FIG. 9A is partial side view of an embodiment dental care device 900, wherein the support arm 940 includes a support element in the form of an aperture 980 for receiving dental floss there through.

FIG. 9B is partial side view of an embodiment dental care device 901, wherein the support arm 940 includes a support element in the form of an open slot 981 for receiving dental floss therein.

FIG. 9C is partial side view of an embodiment dental care device 901, wherein the support arm 940 includes a support element in the form of a pair of opposed edges 981, which defines a narrow retaining formation there between for receiving dental floss therein.

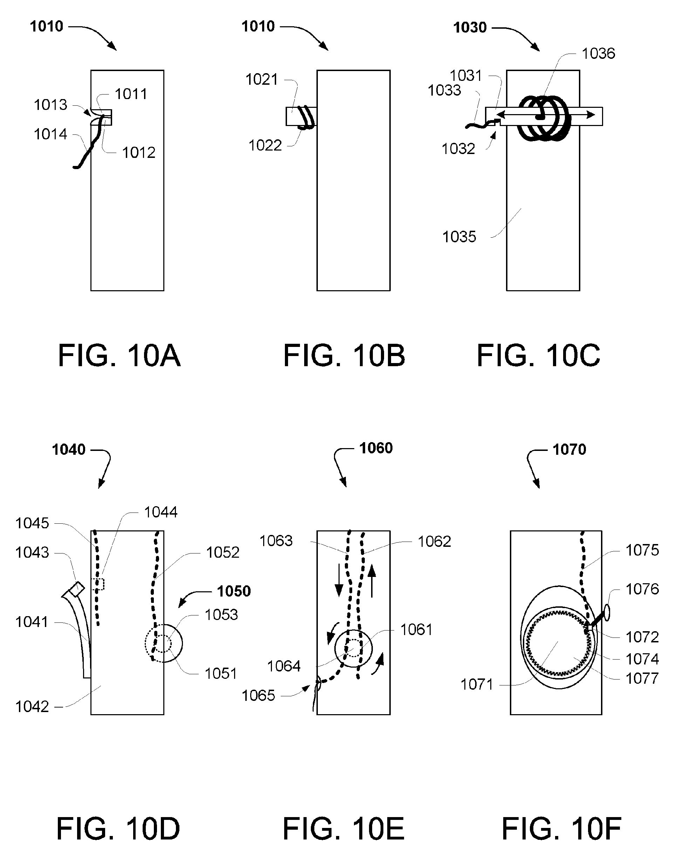

FIG.10A through FIG. 10F each show, by way of example only, an embodiment retaining element for a dental care device. It will be appreciated that the retaining element may be embodied in many other forms.

The device can comprise a pair of retaining elements, operatively associated with opposite ends of the portion of dental floss. A retaining element can include any one of the set comprising: one or more tie pegs; a pair of opposed edges defining a narrow retaining formation there between; a clamp assembly; a ratchet lock assembly. It will be appreciated that one or more retaining elements can be located proximal to the body. Alternatively, each one of a pair of retaining elements can be located on a respective support arm.

FIG. 10A is partial side view of an embodiment retaining element 1010, comprising a pair of opposed edges 1011,1012, which defines a narrow retaining formation 1013 there between for receiving dental floss 1014 therein.

FIG. 10B is partial side view of an embodiment retaining element 1020, comprising a tie peg 1021 for receiving dental floss 1022 there around. The floss is wound around the tie off peg (or hook), to provide a sufficiently strong connection between the floss and the body.

FIG. 10C is partial side view of an embodiment retaining element in the form of a clamp assembly 1030, comprising a clamp member 1031 that defines a niche 1032 for receiving dental floss 1033. The a clamp member 1031 being movable with respect to the body (or support arm) 1035, and is biased into a clamping configuration by a spring member 1036, for clamping dental floss there between.

FIG. 10D is partial side view of an embodiment retaining element in the form of a clamp arm assembly 1040. A clamp arm member 1041 being movable with respect to the body (or support arm) 1042. An abutment element 1043 can be included for cooperating with a receiving recess 1044 for clamping dental floss 1045 there between.

A further embodiment retaining element in the form of a rotatable retaining disc 1050 can be provided for applying a friction surface 1051 for retaining dental floss 1052. It will be appreciated that the dental floss can be wound around a co-operating shaft 1053 for apply further retaining resistance.

FIG. 10E is partial side view of an embodiment retaining element in the form of a rotatable retaining disc 1060. The retaining disc can provide a friction surface 1061 for retaining dental floss 1062, 1063 operatively moving in opposite directions. It will be appreciated that the dental floss can be wound around a co-operating shaft 1064 for applying further retaining resistance. Used dental floss can exit the device via a terminal aperture 1065.

It will be appreciated that a user can draw dental floss by operating a rotary dial element associated with a retaining disc.

FIG. 10F is partial side view of an embodiment retaining element 1070 operatively associated with the spool dental floss source 1071. Rotation of the spool enables dental floss can be drawn there from. The retaining element 1070 includes a pawl 1072 for engaging a plurality of abutment formations 1074 (or detents) provided around the circumference of the spool 1071. Engagement of the pawl 1072 with one of the plurality of abutment formations 1074 restricts further rotation of the spool thereby restraining further drawing of the portion of dental floss 1075. A release element 1076 is operatively associated with the pawl 1072 to disengage it from the abutment formations 1074, thereby enabling the spool to rotate for drawing dental floss. It will be appreciated that, with the spool locked in place, the end of the portion of floss 1075 can be drawn sufficiently taut and retained in position by a further retaining element.

In an embodiment, the pawl 1072 and plurality of abutment formations 1074 define a ratchet mechanism whereby the spool can be counter rotated, while in a locked configuration, to draw back loose dental floss for applying tension to retained dental floss. A protuberance 1077 to the body can be provided for enabling rotation of the spool.

In an embodiment, the dental floss is provided on a spool that is rotatably mounted within the reservoir. As the floss is drawn the drum rotates. The drum can be fixed in place, thereby restraining one end of a portion of floss, by a co-operating lock means operating between the drum and the body. A polarity of detents can be provided around the circumference of the spool for receiving a pawl to restrict further rotation of the drum. A release element is operatively associated with the pawl to disengage it from the detent, and enable the drum to rotate and thereby release floss. With the drum locked in place, the other end of the dental floss can be drawn taut and retained (or locked) in position by a further retaining element.

Embodiments may use various means for retaining a stand of floss such that it may be securely extended between the support arms for use in flossing teeth. For example, the body can include a retaining groove, a peg for fixing floss thereto or a releasable clamping device that is bias to the clamping position.

Typically, the source of dental floss is substantially sealed within the reservoir during manufacture. By way of example, the source of dental floss may not be adapted to be refilled, and upon exhaustion of dental floss from the source, the device can be disposed of.

The embodiments disclosed provide a device that facilitates good dental hygiene by combining a toothbrush and a flossing tool into a single product. For the purposes of disclosure, the term toothbrush is inclusive of both manual and powered toothbrushes.

It would be appreciated that the body can be used as a handle for using the device as a toothbrush and/or a dental floss tool. This use of an elongate handle enables the floss tool to floss teeth in the rear of the mouth.

It will be appreciated that the illustrated dental care device is capable of being selectively used as either a toothbrush or dental floss tool.

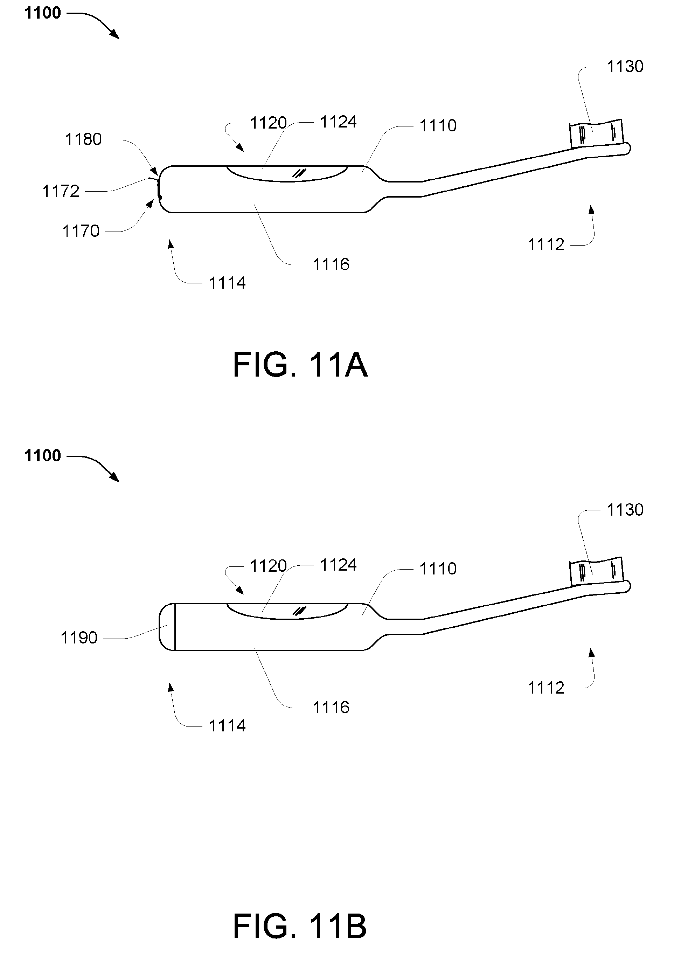

Referring to FIG. 11A and FIG. 11B, an embodiment dental care device 1100 comprises:
an elongate body 1110, wherein the body defines cavity used as a dental floss reservoir 1120;
a brush element 1130 proximal to a first end of the body 1112; and
a floss egress aperture 1170 at a second end of the body 1114.

The body can include a broader mid-section 1116, adapted for defining the cavity reservoir 1120 therein.

An inspection aperture 1124 can be provided for enabling visual inspection of the dental floss remaining in the reservoir. Typically, the inspection aperture has a substantially clear close for enabling visual inspection there through.

This embodiment dental care device can comprise a dental floss egress aperture 1170 within the body 1110 proximal to the dental floss reservoir 1120. This dental floss egress aperture enables a portion of dental floss 1172 to be drawn from a dental floss source comprising a winding of dental floss (not shown). It will be appreciated that a dental floss egress aperture can alternatively be located on the body for enabling the portion of dental floss to be drawn from the dental floss source.

This embodiment dental care device can further comprise a dental floss cutting element 1180 is used to excise a used portion of dental floss. The dental floss cutting element is typically located relative to (or displaced from) the egress aperture 1170 - such that retained dental floss protrudes from the egress aperture.

Referring to FIG. 11B, the device 1100 can comprise a floss cap 1190. The floss cap can be releasablly coupled to the body, and is removable for enabling access to a portion of dental floss drawn from a dental floss source. It will be appreciated that releasable coupling of the floss cap can include hingedly coupled and press fit coupled.

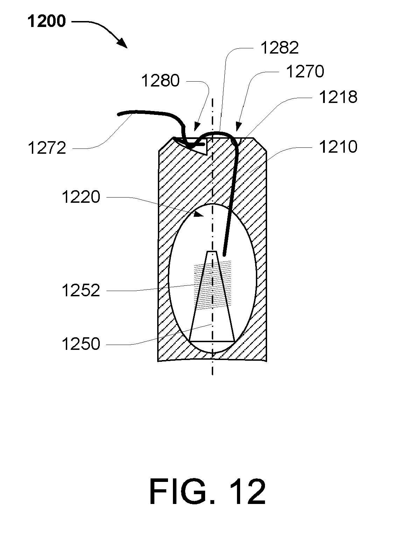

Referring to FIG. 12, an embodiment dental care device 1200 can comprise a dental floss egress aperture 1270 defined by the body 1210. The egress aperture is in floss-communication with the dental floss reservoir 1220, for enabling dental floss 1252 to be drawn from the dental floss source 1250.

In this example embodiment, a portion of dental floss 1272 can be drawn from the dental floss source 1250. The portion of dental floss can be drawn from the dental floss source through the aperture 1270.

A dental floss cutting element 1280 is used to excise a used portion of dental floss, and is typically located relative to (or displaced from) an egress aperture 1270 - such that retained dental floss (for example 1282) protrudes from the aperture once the used portion is excised. A cap element (not shown) can be used to covering any exposed portion of the retained dental floss. Typically, the cutting element is placed at an end face 1218 of the body 1210, to reduce the risk that a user of the device come into contact with the cutting element while the device is being used as a toothbrush.

In this embodiment, the dental floss source can be in the form of a spool of dental floss adapted and wound for enabling dental floss to be drawn axially from the spool. It will be appreciated that the spool can be fixedly mounted or rotatably mounted to the body. Alternatively, the dental floss source can configured as a spool dental floss source (as best shown in FIG. 7) rotatably mounted with respect to the body, wherein rotation of the spool enables dental floss can be drawn there from.

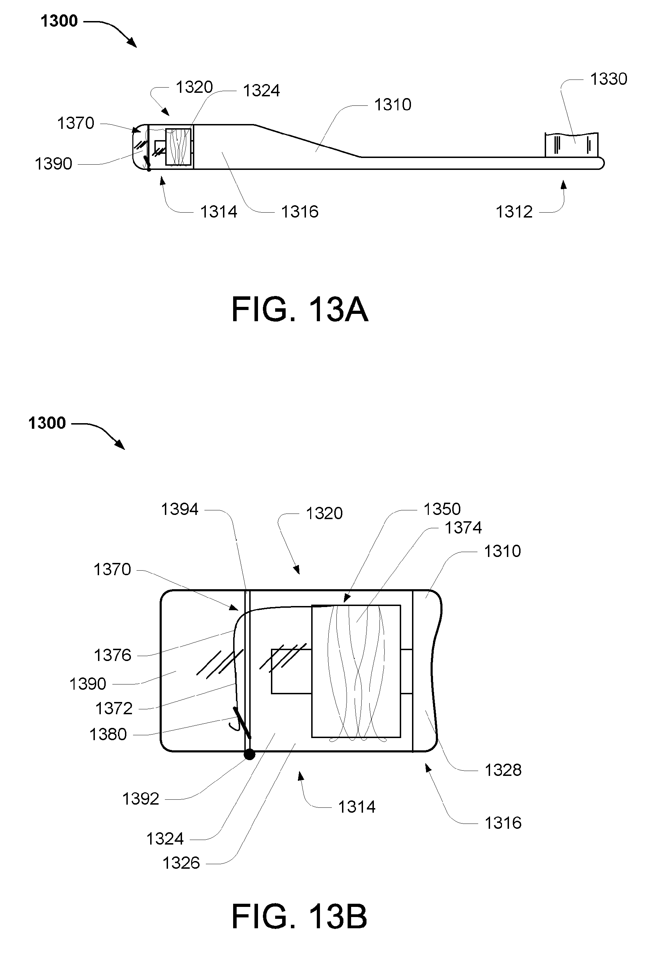

Referring to FIG. 13A through FIG. 13D, an embodiment dental care device 1300 comprises:
an elongate body 1310, wherein the body defines cavity used as a dental floss reservoir 1320;
a brush element 1330 proximal to a first end of the body 1312; and
a floss egress aperture 1370 at a second end of the body 1314.

The body can include a broader section 1316, adapted for defining the cavity reservoir 1320 therein. This broader section 1316 can be used as a handle for the device when used as a toothbrush.

An inspection aperture 1324 can be provided for enabling visual inspection of the dental floss remaining in the reservoir. Typically, the inspection aperture is substantially clear for enabling visual inspection there through.

This embodiment dental care device can comprise a dental floss egress aperture 1370 within the body 1310 proximal to the dental floss reservoir 1320. This dental floss egress aperture enables a portion of dental floss 1372 to be drawn from a dental floss source comprising a winding of dental floss 1374. It will be appreciated that a dental floss egress aperture can alternatively be located on the body for enabling the portion of dental floss to be drawn from the dental floss source.

This embodiment dental care device can further comprise a dental floss cutting element 1380 used to excise a used or useable portion of dental floss. The dental floss cutting element is typically located relative to (or displaced from) the egress aperture 1370 - such that retained dental floss protrudes from the egress aperture.

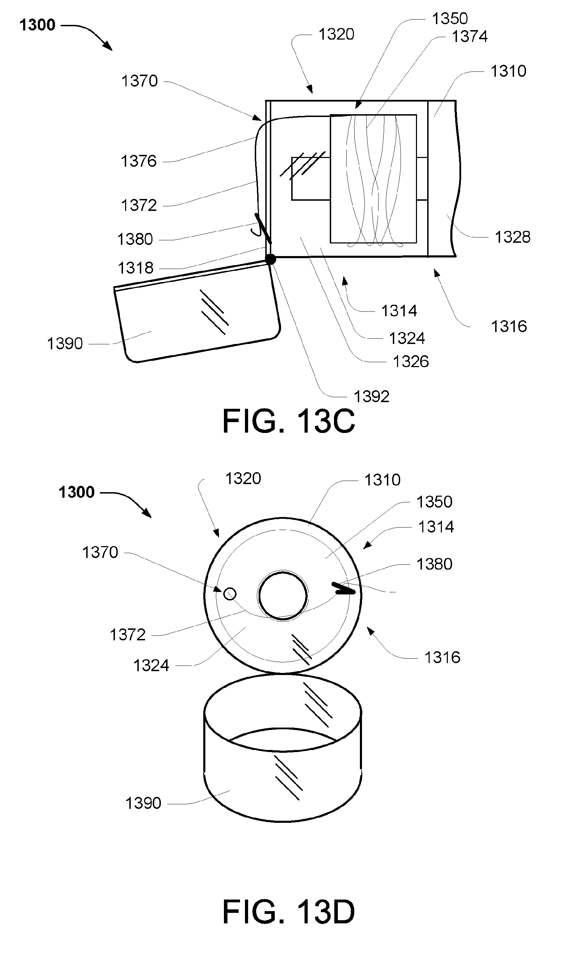

Referring to FIG. 13B, the device 1300 can comprise a floss cap 1390. The floss cap can be hingedly coupled to the body, and can be hingedly rotated about an axis by a hinge 1392 for enabling access to a portion of dental floss drawn from a dental floss source. The cap is retainable in a closed configuration (as shown in FIG. 13B) by a snap (or press) fit engagement 1394. The hinge can introduce friction for substantially temporarily mainlining the floss cap 1390 in an open configuration (as shown in FIG. 13C and FIG. 13D) for accessing dental floss.

It will be appreciated that the embodiment dental care device 1300 can comprise a dental floss egress aperture 1370 defined by the body 1310. The egress aperture is in floss-communication with the dental floss reservoir 1320, for enabling dental floss 1374 to be drawn from the dental floss source 1350. In this example embodiment, a portion of dental floss 1372 can be drawn from the dental floss source 1750. The portion of dental floss can be drawn from the dental floss source through the aperture 1370.

A dental floss cutting element 1380 is used to excise a used portion of dental floss, and is typically located relative to (or displaced from) an egress aperture 1370 - such that retained dental floss (for example 1376) protrudes from the aperture once the used portion is excised. A cap element can be hingedly rotate to a closed configuration (as shown in FIG, 13B) to covering any exposed portion of the retained dental floss. Typically, the cutting element is placed proximal to an end face 1318 of the device 1300, to reduce the risk that a user of the device coming into contact with the cutting element while the device is being used as a toothbrush.

In this embodiment, the dental floss source 1350 can be in the form of a wound spool of dental floss for enabling dental floss to be drawn axially from the spool. It will be appreciated that the spool can be fixedly mounted or rotatably mounted to the body.

In this embodiment, the body 1310 comprises a shaft element 1360 for receiving the dental floss source 1350 in the form of a wound spool of dental floss having a central aperture 1352. The shaft element 1360 can be inserted into the dental floss source aperture for locating the dental floss source 1350 within the dental floss reservoir 1320. It will be appreciated that, in an alternative embodiment, a wound spool of dental floss can be located in a dental floss reservoir: using a cooperating circular configurations of both the a wound spool of dental floss can be located in a dental floss reservoir; and or substantially retained in a fixed relative position while dental floss to be drawn axially from the spool. It will be appreciated that rotation of the , while preferred, is not necessary for dental floss to be drawn axially from the spool.

In an embodiment, the inspection aperture 1324 is in the form of a transparent window element 1326 that substantially defining (or closing) the dental floss reservoir 1320. The window element is coupleable (for example using a press or snap fit engagement) to a portion of the body 1328, for defining cavity used as a dental floss reservoir 1320. It will be appreciated that the window element can be releasablly or fixedly coupled to the a portion of the body. It will be appreciated that the window element can be integrally formed the a portion of the body.

It will be appreciated that the illustrated dental care device is capable of being selectively used as either a toothbrush or dental floss source.

Typically, the source of dental floss is substantially sealed within the reservoir during manufacture. By way of example, the source of dental floss may not be adapted to be refilled, and upon exhaustion of dental floss from the source, the device can be disposed of. Alternatively the source of dental floss may be adapted to be replenished refilled or replaced.

Although the invention has been described with reference to specific examples, it will be appreciated by those skilled in the art that the invention may be embodied in many other forms.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

Similarly, it is to be noticed that the term coupled, when used in the claims, should not be interpreted as being limitative to direct connections only. The terms "coupled" and "connected", along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical, or that two or more elements are not in direct contact with each other but yet still co-operate or interact with each other.

As used herein, unless otherwise specified the use of the ordinal adj ectives "first", "second", "third", etc., to describe a common object, merely indicate that different instances of like objects are being referred to, and are not intended to imply that the objects so described must be in a given sequence, either temporally, spatially, in ranking, or in any other manner.

As used herein, unless otherwise specified the use of terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader, or with reference to the orientation of the structure during nominal use, as appropriate. Similarly, the terms "inwardly" and "outwardly" generally refer to the orientation of a surface relative to its axis of elongation, or axis of rotation, as appropriate.

Similarly it should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Thus, while there has been described what are believed to be the preferred embodiments of the invention, those skilled in the art will recognize that other and further modifications may be made thereto without departing from the spirit of the invention, and it is intended to claim all such changes and modifications as fall within the scope of the invention. For example, any formulas given above are merely representative of procedures that may be used. Functionality may be added or deleted from the block diagrams and operations may be interchanged among functional blocks. Steps may be added or deleted to methods described within the scope of the present invention.

It will be appreciated that an embodiment of the invention can consist essentially of features disclosed herein. Alternatively, an embodiment of the invention can consist of features disclosed herein. The invention illustratively disclosed herein suitably may be practiced in the absence of any element which is not specifically disclosed herein.

## Claims

1. A dental care device for selective use as a toothbrush or a dental floss source, the device comprising:
an elongate body, wherein the body defines cavity used as a dental floss reservoir;
a brush element proximal to a first end of the body; and
a dental floss egress aperture at a second end of the body;
wherein a dental floss source is locatable within the cavity; and the dental floss egress aperture enables a portion of dental floss to be drawn from the dental floss source.

2. The dental care device according to claim 1, wherein the body includes a window element for enabling visual inspection of the dental floss remaining in the reservoir.

3. The dental care device according to claim 2, wherein the window element at least partially defines the dental floss reservoir.

4. The dental care device according to any one of the preceding claims, wherein the dental floss source includes a spool of dental floss which is mounted substantially axially parallel with the elongate body within the reservoir such that dental floss can be drawn from the spool.

5. The dental care device according to claim 4, wherein the spool is rotatably mounted with respect to the body, wherein the rotation of the spool enables dental floss can be drawn from the spool.

6. The dental care device according to any one of the preceding claims, wherein a first end of a portion of dental floss, being proximal to the floss source, is retained from being further drawn from the reservoir by a first retaining element.

7. The dental care device according to any one of the preceding claims, further comprising a hinged cap element having a closed configuration for covering an exposed portion of the retained dental floss.

8. The dental care device according to any one of the preceding claims, further comprising a dental floss cutting element for excising a usable portion of dental floss, wherein the cutting element is located such that retained dental floss protrudes from the dental floss egress aperture and is coverable by the cap element.

9. The dental care device according to any one of the preceding claims, wherein the dental floss egress aperture is proximal to the dental floss reservoir.

10. The dental care device according to any one of the preceding claims, comprising a pair of outwardly extending support arms at a second end of the body for enabling selective use of the device as a toothbrush or a dental floss tool

11. The dental care device according to claim 10, wherein the body is bifurcated at the second end to integrally form the pair of support elements.

12. The dental care device according to claim 10 or claim 11, wherein each support arm has a support element configured to support a segment of dental floss extended there between.

13. The dental care device according to any one of claims 10 to 12, wherein the support element can include any one of the set comprising: a through aperture defined through the respective support arm; an open niche defined across the respective support arm; an egress aperture defined in floss-communication with the dental floss reservoir.

14. The dental care device according to any one of claims 10 to 13, comprising one or more retaining elements for retaining the portion of dental floss such that a section of dental floss supported between the support arms is held sufficiently taut for flossing teeth.

15. The dental care device according to any one of the preceding claims, wherein the brush element includes a plurality laterally extending bristle members.
